# FASCICULE DE BREVET EUROPEEN

(11) **EP 3 775 825 B1**
(45) Date de publication et mention de la délivrance du brevet: **31.07.2024**
(21) Numéro de dépôt: 19719343.6
(22) Date de dépôt: 04.04.2019
(51) Int. Cl.: G01M 3/36, G01D 5/16

(54) **PROCEDE ET DISPOSITIF DE CONTROLE D'INTEGRITE D'UNE POCHE POUR FLUIDE BIOPHARMACEUTIQUE**
VERFAHREN UND VORRICHTUNG ZUR PRÜFUNG DER INTEGRITÄT EINES BEUTELS FÜR BIOPHARMAZEUTISCHE FLÜSSIGKEIT
METHOD AND DEVICE FOR CHECKING THE INTEGRITY OF A POUCH FOR BIOPHARMACEUTICAL FLUID

(30) Priorité: 12.04.2018 FR 1870441
(43) Date de publication de la demande: 17.02.2021
(73) Titulaire: SARTORIUS STEDIM FMT SAS, 13400 Aubagne (FR)
(72) Inventeur: CAPPIA, Jean-Marc, 13420 Gemenos (FR)
(74) Mandataire: Novagraaf International SA
(86) Numéro de dépôt international: PCT/FR2019/000049
(87) Numéro de publication internationale: WO 2019/197735

(56) Documents cités:
- EP-A1- 3 062 081
- CN-A- 106 996 855
- GB-A- 2 162 648
- US-A- 4 965 554
- US-A- 5 760 295

## Description

### Domaine technique

L'invention concerne un procédé de contrôle d'intégrité d'une poche pour fluide biopharmaceutique, notamment pour des poches à usage unique pour des fluides biopharmaceutiques. L'invention concerne également un dispositif de contrôle d'intégrité pour la mise en oeuvre de ce procédé.

### Contexte et Art Antérieur

La présente invention est en particulier destinée à des poches stériles à usage unique pour des fluides biopharmaceutiques. Dans ce cas, on peut être amené à placer dans les poches des produits de haute valeur ajoutée, pour lesquels il est important que la poche soit intègre et donc ne présente pas de point de fuite du produit. Ces poches sont en général souples et non poreuses.

On entend ici par produit biopharmaceutique un produit issu de la biotechnologie, tels que milieux de cultures, cultures cellulaires, vaccins, solutions tampon, liquides de nutrition artificielle, ou un produit pharmaceutique ou plus généralement un produit destiné à être utilisé dans le domaine médical. Un tel produit est sous forme liquide, pâteuse, poudreuse, en une ou plusieurs phases, homogènes ou non, apte à s'écouler à travers une valve, pouvant ainsi être qualifié de fluide. L'invention peut s'appliquer également à des produits autres que biopharmaceutiques, selon la définition qui vient d'en être donnée, mais qui sont soumis à des exigences analogues en ce qui concerne leur stockage ou leur traitement. Outre le transfert d'un produit biopharmaceutique, la poche peut être adaptée pour un bioréacteur ou un fermenteur.

Il est ainsi indispensable de s'assurer que les poches soient étanches, donc que le produit contenu à l'intérieur de la poche ne puisse pas être pollué ou contaminé en aucune manière par des éléments extérieurs.

Cela s'impose d'autant plus dans le cas où la poche comporte des lignes de soudure qui peuvent constituer des sources de fuite.

Afin de contrôler l'intégrité d'une poche, on connaît par exemple le procédé de contrôle du document EP223842.

Le procédé de ce document consiste à introduire du gaz stérile dans la poche et à mesurer la pression de celui-ci dans la poche. Une diminution de pression est synonyme de l'existence de fuite au niveau de la poche. Ce type de test s'effectue avant utilisation de la poche, c'est-à-dire lorsque la poche est vide de produit.

Cependant, ce type de procédé nécessite l'injection d'un gaz stérile afin de ne pas contaminer la poche. L'opération d'injection de gaz représente ainsi un risque pour la stérilité de la poche et demande l'utilisation d'un filtre à air stérilisant qui doit lui aussi être testé en intégrité. L'opération de test est donc complexe est consommatrice de temps.

Par ailleurs ce type de procédé ne permet pas de tester la poche lorsque celle-ci est remplie d'un produit biopharmaceutique.

On connaît aussi la méthode dite du « challenge bactériologique » qui consiste à remplir la poche avec un milieu de culture et de plonger celle-ci toute entière dans un milieu contenant une concentration bactérienne. On vérifie ensuite que le fluide renfermé dans la poche ne contient pas de développement bactériologique ce qui traduirait un défaut d'intégrité de la poche. L'inconvénient majeur de ce test est le temps de mise en culture qu'il nécessite, 14 jours à minima, et pendant lequel le produit biopharmaceutique élaboré dans ces poches doit être stocké avant de pouvoir être libéré ou détruit s'il s'avère que la poche n'était pas intègre.

Le document EP3062081 Al décrit un procédé pour contrôler l'intégrité d'une poche selon l'état de la technique.

Un but de l'invention est de proposer un procédé de contrôle d'intégrité d'une poche ne présentant pas les inconvénients de l'art antérieur ainsi qu'un dispositif pour un tel procédé.

### Résumé de l'invention

A cet effet, selon un premier aspect il est proposé un procédé pour contrôler l'intégrité d'une poche (3) contenant un fluide biopharmaceutique selon la revendication 1.

Autrement dit, si la pression a trop baissé, en l'occurrence plus qu'une baisse admissible liée à la relaxation du matériau de la poche, cela révèle une fuite de liquide depuis l'intérieur de la poche vers l'extérieur.

Moyennant quoi, le procédé proposé permet de tester la poche alors que celle-ci contient déjà du fluide biopharmaceutique, sans introduire de gaz ou du liquide à l'intérieur de la poche. Il n'y a ainsi pas d'invasion à l'intérieur de la poche. On ne met pas en jeu un milieu de culture bactériologique au contact de la poche ni du dispositif. De sorte que le test s'avère particulièrement simple et relativement rapide.

De plus, avantageusement, on utilise seulement le déplacement relatif des plaques pour compresser la poche par l'extérieur, aucun autre élément n'est nécessaire, notamment aucun autre élément en interaction avec la poche pour la pressurer ou pour la guider.

Il faut noter que le terme « poche » peut désigner ici des poches d'une capacité qui peut aller de 1 litre à 1000 litres, que ce soit des poches plates dite '2D', des poches en volume à soufflets, voire des poches dites 3D, la dimension en épaisseur étant alors substantiellement du même ordre de grandeur que les deux autres dimensions.

Dans divers modes de réalisation du procédé, on peut éventuellement avoir recours en outre à l'une et/ou à l'autre des dispositions suivantes, prises isolément ou en combinaison.

Selon une option, le critère prédéfini peut correspondre à une baisse (totale) de pression (ΔP) au bout d'une durée prédéfinie (TT), à savoir un état de défaut est déclaré pour la poche si la baisse de pression (ΔP) au bout de la durée prédéfinie (TT) est supérieure à un seuil prédéterminé (ΔPth).

Moyennant quoi, on utilise un critère simple et fiable pour déterminer si la poche est intègre ou non ; avantageusement, ce critère de test s'avère particulièrement bien répétable ; de plus, l'utilisation d'une baisse de pression permet de travailler en mode différentiel et de s'affranchir de la valeur absolue de la pression atmosphérique locale.

Selon une option, on retranche, de ladite baisse de pression, une éventuelle variation de la pression atmosphérique locale, moyennant quoi on peut s'affranchir des variations éventuelles de pression atmosphérique qui pourraient subvenir pendant la durée du test.

Selon une option, la durée prédéfinie (TT) peut être comprise entre 3 minutes et 60 minutes, de préférence comprise entre 5 et 30 minutes, et de manière encore préférée comprise entre 10 et 20 minutes.

La durée de test reste modérée, très inférieure à la durée du challenge bactériologique ; la durée de test peut être modulée en fonction de la criticité du produit et du niveau d'exigence du test d'intégrité.

Selon une option, le critère prédéfini peut correspondre à une baisse de pression par unité de temps (ΔP/t), à savoir un état de défaut est déclaré pour la poche si la baisse de pression par unité de temps est supérieure à un seuil prédéterminé. Moyennant quoi, on peut obtenir une révélation précoce d'un défaut éventuel sans attendre nécessairement la durée prédéfinie prévu pour le test. Ceci permet notamment de révéler une fuite assez substantielle ou un défaut de soudure de la poche non détecté précédemment.

Selon une option, la pression de test (Ptest) peut être comprise entre à 300 millibars et 1bar, de préférence comprise entre 400 millibars et 700 millibars.

Une telle pression de test reste modérée, elle ne risque pas de faire lâcher la soudure périphérique, la pression de test peut être modulée en fonction de la criticité du produit et du niveau d'exigence du test d'intégrité ; la pression de test peut être modulée en fonction de la viscosité du produit contenu dans la poche.

Selon une option, la pression de test (Ptest) est obtenue en utilisant le capteur de pression (6;16) et en rapprochant relativement les deux plaques jusqu'à ce que la pression de test (Ptest) soit atteinte.

Il s'agit d'une méthode simple et fiable pour appliquer par l'extérieur la pression souhaitée à l'intérieur de la poche, de plus on obtient ainsi une bonne indépendance vis-à-vis de la géométrie et du volume de la poche.

Selon l'invention, chaque plaque comprend une armature (10,20), une couche frontale poreuse (11,21) électriquement conductrice et une couche intermédiaire poreuse (12,22) interposée entre la couche frontale poreuse et l'armature, la couche intermédiaire étant électriquement non conductrice lorsqu'elle est sèche, le procédé comprenant, après l'étape s1, et le cas échéant en parallèle des étapes s3 et s4 :
c- appliquer une différence de potentiel électrique entre une électrode d'armature (10,20;17;27) et la couche frontale poreuse (11, 21), pour au moins une des plaques,
d- mesurer une valeur électrique représentative d'un courant électrique (i-leak) passant au travers de la couche intermédiaire (12,22), un tel courant étant représentatif de la présence d'un liquide de fuite à l'intérieur de la couche intermédiaire,
e- en déduire un état de défaut de la poche si la valeur électrique représentative d'un courant électrique dépasse un critère prédéfini (Ith).

Ainsi, on combine astucieusement une méthode basée sur la détection de baisse de pression et une méthode basée sur la détection d'un liquide à l'intérieur de la couche intermédiaire ce qui révèle une fuite du liquide à l'extérieur de la poche. On peut ainsi fiabiliser le critère de détermination d'intégrité ou de non-intégrité de la poche à contrôler.

Selon un deuxième aspect, l'invention a pour objet un dispositif pour contrôler l'intégrité d'une poche (3) contenant un fluide biopharmaceutique, le dispositif comprenant au moins un capteur de pression (6;16), une unité de calcul (5), deux plaques (1, 2) ayant des surfaces frontales poreuses entre lesquelles on vient interposer la poche à contrôler (3) et au moins un actionneur (4) configuré pour déplacer au moins une des plaques, le dispositif étant configuré pour mettre en oeuvre le procédé décrit ci-dessus.

Moyennant quoi, le matériel mis enjeu s'avère particulièrement simple et convient pour une grande diversité de types de poche à contrôler. On utilise seulement le déplacement des plaques pour compresser de façon maîtrisée la poche par une action extérieure, aucun autre élément n'est nécessaire, notamment aucun autre élément en interaction avec la poche ; de sorte que le test s'avère particulièrement simple, fiable et relativement rapide à mettre en oeuvre.

Dans divers modes de réalisation du dispositif, on peut éventuellement avoir recours en outre à l'une et/ou à l'autre des dispositions suivantes, prises isolément ou en combinaison.

Selon une option, le capteur de pression (6) est agencé sur un port (33) de la poche. On mesure ainsi directement la pression qui règne à l'intérieur de la poche.

Selon une option, le capteur de pression (16) est agencé dans au moins une des plaque, de préférence derrière la surface ou la couche poreuse, sans contact direct avec la poche à contrôler. Moyennant quoi on obtient, par une méthode indirecte et sans contact direct avec la poche, une image représentative de la pression régnant à l'intérieur de la poche. Dans ces conditions, on peut éliminer un risque de fausse détection positive liée à une manipulation incorrecte concernant l'installation du capteur direct sur un port de la poche. Il peut être prévu un tel capteur de pression sans contact dans les deux plaques.

Selon une option, au moins une des plaques est montée mobile en translation, sur un système de glissière. Ainsi, on exerce une action mécanique bien à plat sur les faces principales de la poche, sans risquer une déformation parasite.

Selon une option, il est prévu une première plaque (1) à position fixe, et une deuxième plaque (2) montée de façon mobile, de préférence au-dessus de la première plaque. Ceci constitue un montage mécanique simple et fiable.

Selon une option, les plaques montées à rotation l'une par rapport à l'autre. Ce type de montage mécanique est particulièrement simple et peu onéreux à mettre en oeuvre.

Selon une option, les surfaces frontales poreuses sont formées en matière non tissée, choisie parmi les polypropylènes ou les polyéthylènes, ou autres matériaux polymères similaires ou combinaison hybride de polypropylène et polyéthylène. Ces matériaux s'avèrent disponibles et bon marché. Leur porosité permet de laisser passer les fluides dans la gamme de viscosité principalement visée.

Selon une option, on peut choisir un matériau de type polyéthylène haute densité.

Selon une option, la surface frontale est formée comme une couche frontale poreuse présentant une épaisseur comprise entre 1mm et 3mm, et des pores de dimensions comprises entre 20 microns et 500 microns. Une telle épaisseur s'avère suffisante et correspond à des gammes d'épaisseur disponible dans la pratique. Le diamètre des pores permet de laisser passer les fluides dans la gamme de viscosité principalement visée.

Selon une option, les surfaces frontales des plaques sont agencées soit substantiellement horizontalement, soit substantiellement verticalement. On peut choisir l'une ou l'autre des configurations selon les principes de manutention retenus et le volume des poches considérées. Il n'est pas exclu pour autant d'avoir une autre orientation, par exemple inclinée.

Selon une option, l'actionneur (4) de mise en pression des plaques est formé comme un vérin pneumatique ou comme un vérin électrique. Ce type d'actionneur permet avantageusement d'appliquer une pression mécanique de façon fiable et bien contrôlée; de plus il n'y a pas de fluide autre que l'air, par conséquent ce type d'actionneur reste propre et n'est pas polluant.

### Description des figures

D'autres caractéristiques et avantages de l'invention apparaîtront au cours de la description suivante donnée à titre d'exemple non limitatif, en regard des dessins joints, sur lesquels :
- les figures 1A, 1B, 1C représentent une poche destinée à subir un contrôle d'intégrité, la poche contenant un produit biopharmaceutique, respectivement en vue de face, en vue de profil et en vue de dessus,
- la figure 2 représente schématiquement un dispositif selon la présente invention avec deux plaques de mise en pression et la poche de la figure 1, avant le début du test d'intégrité, selon un premier mode de réalisation de la présente invention,
- la figure 3 est analogue à la figure 2, et représente schématiquement le dispositif pendant la mise en oeuvre du test,
- la figure 4 représente schématiquement un dispositif, selon un second mode de réalisation de la présente invention, avec deux plaques de mise en pression et la poche de la figure 1, avant le début du test d'intégrité,
- la figure 5 est analogue à la figure 4, et représente schématiquement le dispositif pendant la mise en oeuvre du test,
- la figure 6 représente un diagramme fonctionnel du dispositif avec son unité de commande,
- la figure 7 illustre un diagramme de temps avec des pressions mises en oeuvre pendant la séquence de test d'intégrité selon le premier mode de réalisation.
- la figure 8 représente un diagramme de circuit électrique du dispositif selon le second mode de réalisation,
- la figure 9 illustre un diagramme de temps avec des tensions et courant mises en oeuvre pendant la séquence de test d'intégrité selon le second mode de réalisation.

### Description détaillée

Sur les différentes figures, les mêmes références désignent des éléments identiques ou similaires. Pour des raisons de clarté de l'exposé, certaines éléments ne sont pas nécessairement représentés à l'échelle, notamment concernant les épaisseurs de couches poreuses qui ont été exagérées à dessein.

Le dispositif de contrôle **7** présenté aux figures permet de contrôler l'intégrité d'une poche à contrôler **3** contenant un produit biopharmaceutique F. La poche **3** peut contenir par exemple de 1 litre jusqu'à de 1000 litres de fluide biopharmaceutique F.

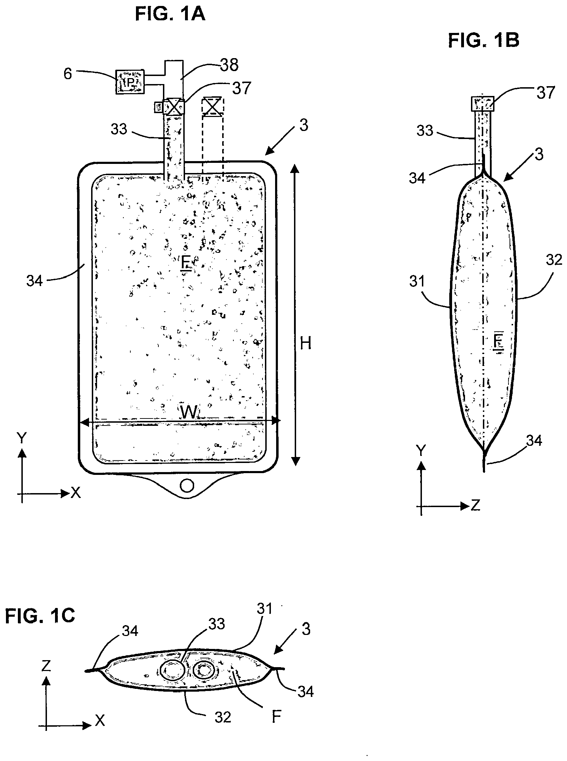

Dans l'exemple illustré aux figures, il s'agit d'une poche dite '*2D*' formée principalement par deux parois **31,32** agencées en regard l'une de l'autre. Les parois **31,32** sont soudées entre elles sur la bordure périphérique **34** de sorte à fermer la poche de façon étanche. Il est prévu un ou plusieurs ports **33** raccordés de façon étanche à la poche pour emplir et/ou vider le contenu de la poche. Une telle poche dite '*2D*' présente une épaisseur substantiellement inférieure aux deux autres dimensions largeur et hauteur de la poche. Dans l'exemple qui peut telle qu'illustrée, la hauteur **H** (selon l'axe Y en Fig 1A) de la poche peut aller de 10 cm à 150 cm, la largeur **W** (selon l'axe X en Fig 1A) de la poche peut aller de 5 cm à 50 cm. L'épaisseur selon la troisième dimension repérée ici Z peut aller de 1 cm à 25 cm.

L'invention peut également être appliquée à des poches 2D avec soufflet dans lesquelles l'épaisseur relative peut être substantiellement plus importante, comme par exemple enseignée dans le document EP223842.

On note aussi qu'il n'est pas exclu d'appliquer la présente invention à des poches dites pour lesquelles `3D' la dimension en épaisseur est substantiellement du même ordre de grandeur que les deux autres dimensions.

Le dispositif de contrôle **7** comprend deux plaques : une première plaque **1** et une seconde plaque **2.** Les première et seconde plaques **1,2** sont destinées à venir en contact avec la poche 3 à contrôler.

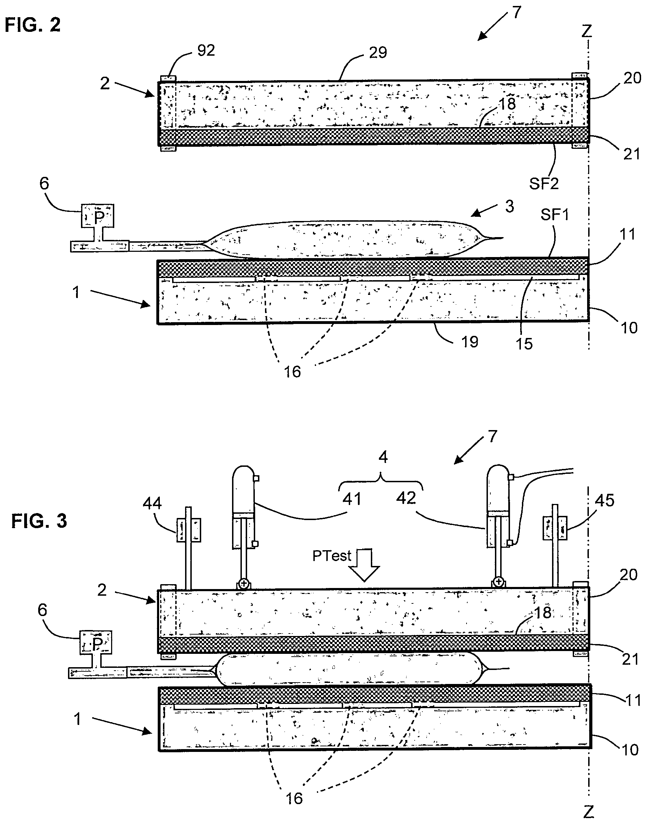

Plus précisément, comme illustré aux figures 2 et 3, la poche 3 est interposée entre les deux plaques **1,2** et les plaques **1,2,** par leur déplacement relatif, viennent prendre appui sur la poche 3 et pressurent alors la poche 3. En d'autres termes, les plaques vont pressurer la poche 3 pour appliquer une pression sur la poche 3 par l'extérieur. La pressurisation de la poche 3, remplie du fluide biopharmaceutique, se fait ainsi par l'extérieur de la poche 3 sans invasion intérieure de gaz ou de liquide.

La poche comprend à l'extrémité libre du port **33** un robinet d'arrêt **37** sur lequel peut être raccordé un moyen de mesure de la pression, typiquement un capteur de pression 6. Dans l'exemple illustré, le capteur de pression est agencé sur un manchon en T raccordé sur le robinet d'arrêt **37.**

### Plaques

Chacune des plaques **1,2,** est épaisse et solide, elle forme une structure pas ou très peu déformable.

La plaque inférieure (ici première plaque **1**) comprend une armature **10** conférant une robustesse structurelle à la plaque **1**. L'armature est fabriquée en métal, par exemple acier inoxydable, aluminium, ou tout autre alliage non sujet à la corrosion. Ses dimensions en longueur et largeur, peuvent aller de 30 cm à 2 m, son épaisseur peut aller de 5 cm à 25 cm. La forme générale de l'armature est parallélépipédique.

L'armature comprend une face dorsale **19** qui dans l'exemple illustré va venir s'appuyer sur un bâti de laboratoire ou est monté sur châssis. La face opposée de l'armature n'est pas destinée à venir en contact directement avec la poche. En effet, il est prévu une surface frontale poreuse **SF1.**

Dans un exemple de réalisation, cette surface frontale est formée par une couche frontale poreuse repérée **11.** La couche frontale poreuse 11 est formée en matière non tissée, choisie parmi les polypropylènes ou les polyéthylènes, ou autres matériaux polymères similaires ou combinaison hybride de polypropylène et polyéthylène. La porosité de ces matériaux permet de laisser passer les fluides dans la gamme de viscosité principalement visée. On peut choisir par exemple un produit de la gamme Novatexx de la société Freudenberg Filtration^{™} ou un produit de la gamme XS de la société Porex^{™}. Selon une autre réalisation la couche frontale est formée d'un composé d'acétate d'éthyl-vinyle, ou de polyéthylène haute densité.

La couche frontale poreuse **11** présente de préférence une épaisseur homogène et recouvre substantiellement toute la surface de la première de manière à pouvoir traiter des poches différentes dimensions.

La couche frontale poreuse **11** présente de préférence une épaisseur comprise entre 1mm et 3mm.

La couche frontale poreuse comporte des pores de dimensions comprises entre 10 microns et 200 microns, selon une disposition de répétition géométrique du même ordre de grandeur, en surface et dans le volume. Ainsi, des liquides allant de l'eau quasi pure jusqu'à une solution de viscosité 10 milli-Poiseuille voire de viscosité 50 milli-Poiseuille peuvent traverser la couche poreuse. En somme, la couche frontale poreuse 11 permet de laisser s'infiltrer une gamme de liquide avec des viscosités allant de 0,5 milli-Poiseuille à 100 milli-Poiseuille. De la sorte, on ne risque pas une occultation d'une fuite, même très petite et très localisée, de par le contact surfacique entre les plaques de mise en pression et la poche elle-même. Autrement dit la présence du matériau pour eux au contact de la poche évite de former un bouchon qui occulterait une fuite potentielle

Il est prévu optionnellement entre l'armature **10** et la couche frontale **11** un intervalle **15** dans lequel sont disposés un ou plusieurs capteurs de pression **16.**

En pratique, il peut s'agir d'une plaquette piézo-électrique, ou une plaquette de type jauge de contraintes. Plusieurs capteurs de pression peuvent être disposés sur la surface utilisée ; il peut être prévu en outre des entretoises élastiques pour le maintien homogène de la couche frontale sur l'armature **10.** Des capteurs de pression intégrée à l'intérieur de la plaque fournissent une image fidèle de la pression appliquée sur la poche.

La plaque supérieure (ici deuxième plaque 2) comprend, dans une configuration symétrique, une armature **20** conférant une robustesse structurelle à la plaque 2. Comme la première, l'armature est fabriquée en métal, par exemple acier inoxydable, aluminium, ou tout autre alliage non sujet à la corrosion.

L'armature comprend une face dorsale **29** qui dans l'exemple illustré va venir recevoir au moins un actionneur de mise en pression qui sera détaillé plus loin

La face inférieure **18** de l'armature n'est pas destinée à venir en contact directement avec la poche. En effet, il est prévu une surface frontale poreuse **SF2.** Comme exposé précédemment, cette surface frontale est formée par une couche frontale poreuse repérée 21, analogue à la couche frontale décrite pour la première plaque.

De même, la couche frontale poreuse **21** présente de préférence une épaisseur homogène et recouvre toute la surface de la première de manière à pouvoir traiter des poches différentes dimensions. La couche frontale poreuse **21** présente une épaisseur comprise entre 1mm et 3mm, et des pores de dimensions comprises entre 10 microns et 200 microns.

Il faut remarquer que la deuxième plaque peut être également équipée dans un intervalle entre l'armature et la couche frontale de capteurs de pression (non représentés aux figures). La forme générale de l'armature est parallélépipédique, toutefois la partie centrale peut être plus épaisse que les zones de bordure.

Dans un exemple, la deuxième plaque **2** est montée à translation le long de l'axe **Z,** par rapport à la première plaque qui est fixe. Le montage à translation peut faire appel à un système de glissières connues en soi donc non décrit en détail ici. En outre, il peut être prévu sur le système de glissières un ou plusieurs freins **44,45** qui peuvent sélectivement immobiliser la position courante de la deuxième plaque.

En outre, il est prévu au moins un actionneur **4** de mise en pression des plaques l'une vers l'autre. Dans l'exemple illustré, on a représenté deux vérins pneumatiques **41,42** qui forment les actionneurs pour pousser vers le bas la deuxième plaque 2 afin de pressuriser la poche.

En variante, il est possible d'utiliser comme actionneur(s) des vérins électriques ou des systèmes de type pignon-crémaillère à moteur électrique. Il est également possible d'utiliser un système de came excentrique commandée par moto réducteur. La came excentrique pousse le dos de l'armature mobile ; dans un tel système on peut avantageusement se dispenser d'un frein pour maintenir la position.

Il peut être prévu un système de rappel à ressort, agissant à l'encontre de l'action des vérins, ou bien des vérins à double effet, ceci afin de de remonter la deuxième plaque à la fin du test d'intégrité.

S'agissant du maintien de la couche frontale sur l'armature, plusieurs solutions peuvent être envisagées. Une solution consiste à prévoir des liens physiques comme représenté aux figures à la référence **92,** de manière à maintenir la cohésion entre l'armature et la couche frontale, de préférence sur les zones périphériques de la couche frontale. Une autre solution fait appel à un système à dépression ; ou à un système de ventouses.

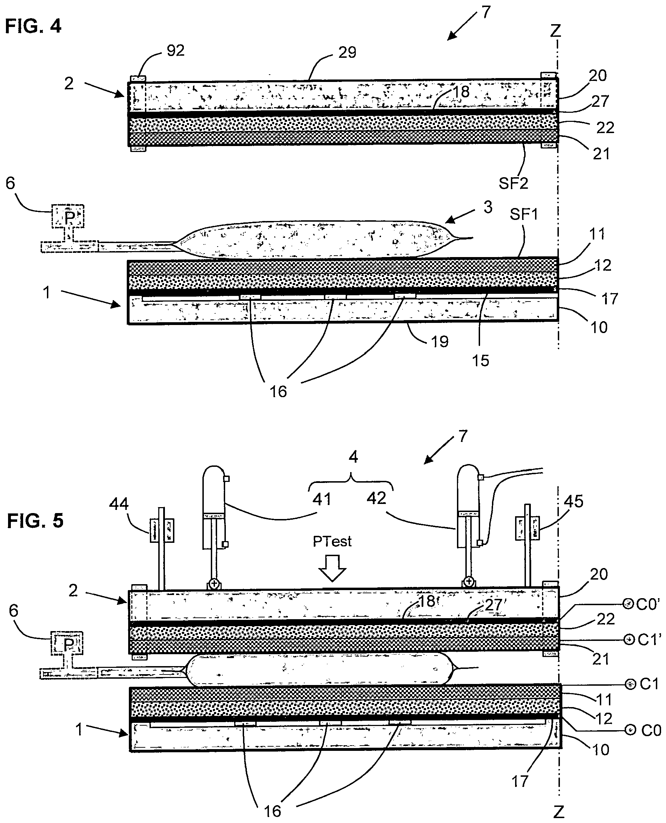

Selon l'exemple illustré aux figures, la première plaque **1** est fixe, et la deuxième plaque **2** est montée mobile, en translation le long de l'axe **Z** entre une position éloignée (figures 2 et 4) et une position de mise en compression (figures 3 et 5). La course d'éloignement peut typiquement être de l'ordre de 50 cm voire 1 m.

Il peut être prévu une cinématique mixte avec une approche grossière pour la course de rapprochement général et l'intervention de l'actionneur décrit plus haut pour le système de mise en pression concernant la course finale qui doit être finement contrôlée.

Dans une variante non représentée, les deux plaques pourraient être mobiles, l'une par rapport à l'autre, et le cas échéant aussi par rapport à un bâti.

Dans une variante non représentée, les plaques peuvent être montées à rotation l'une par rapport à l'autre. Dans ce cas, il peut être prévu une ouverture à environ 90° pour la position éloignée.

### Test de pression

La pression utilisée pour le contrôle d'intégrité de la poche 3, est appelée ici pression de test notée **Ptest.** La pression de test **Ptest** est une pression prédéfinie comprise entre 20 millibars et 1000 millibars selon l'application visée. Par exemple, la pression de test **Ptest** est une pression relative comprise entre 300 millibars et 500 millibars, dans beaucoup de cas pratiques. Par exemple, pour certains types de liquide la pression de test **Ptest** est comprise entre 400 millibars et 700 millibars.

Par exemples illustrés aux figures il est prévu un capteur de pression **6** agencé sur un port **33** de la poche, lequel permet de mesurer directement la pression qui règne à l'intérieur de la poche.

Optionnellement, on retranche de la pression mesurée par le capteur de pression de pression **6,** la valeur de pression atmosphérique locale mesurée par ailleurs afin de compenser une éventuelle variation de la pression atmosphérique locale qui pourrait subvenir pendant la durée du test.

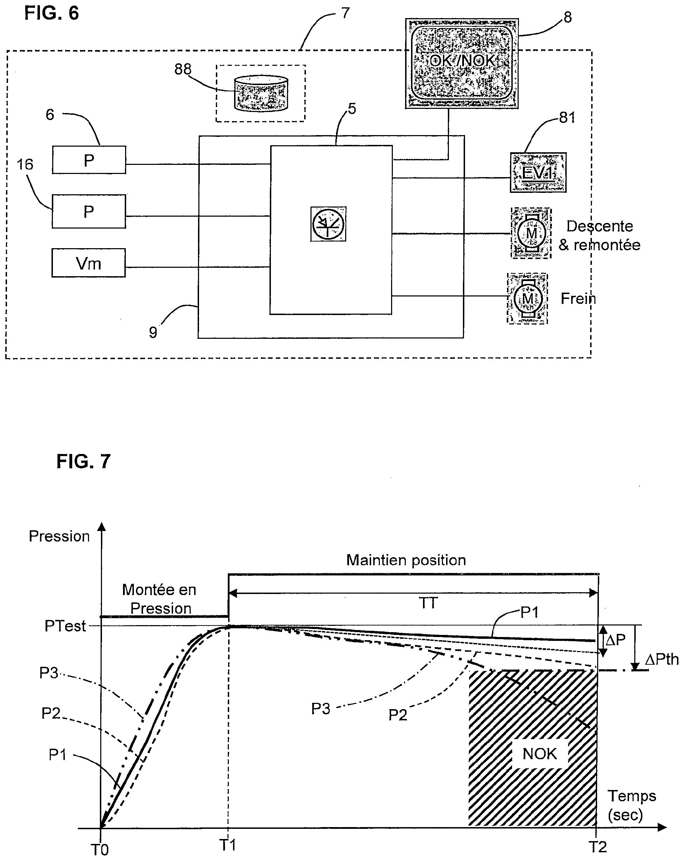

Comme illustré à la figure 7, le procédé propose d'appliquer un effort mécanique extérieur sur la poche pour faire monter la pression à l'intérieur de la poche jusqu'à la pression de test **Ptest** ; puis de maintenir la configuration sans changement, et notamment sans mouvement de la deuxième plaque, cependant que l'on examine l'évolution de la pression au cours du temps.

L'évolution de la pression au cours du temps peut être obtenue par un des capteurs de pression déjà mentionnée à savoir un capteur dit 'direct' en relation fluidique directe avec la poche, ou bien avec un capteur de mesure indirecte agencée à l'intérieur de la première plaque (et/ou de la deuxième plaque). Le cas échéant, l'évolution de la pression au cours du temps peut être obtenue par encore un autre capteur non représenté aux figures.

La pression de test **Ptest** est obtenue en utilisant l'un ou l'autre des capteurs de pression **6,16** et en rapprochant relativement les deux plaques jusqu'à ce que la pression de test **Ptest** soit atteinte.

La mise en pression est obtenue par déplacement d'au moins une plaque au moyen de la commande d'un actionneur 4.

La phase de mise en pression entre l'instant **T0** et l'instant **T1** peut être courte voire très courte c'est-à-dire de l'ordre de quelques secondes.

A l'inverse, la durée de surveillance de l'évolution de pression est relativement plus longue à savoir entre les instants **T1** et **T2** ce qui représente une durée notée **TT,** généralement de plusieurs minutes à plusieurs dizaines de minutes.

La durée prédéfinie **TT** peut être comprise entre 3 minutes et 60 minutes, de préférence comprise entre 5 et 30 minutes, et de manière encore préférée comprise entre 10 et 20 minutes.

Bien entendu, la température environnante de l'équipement de test n'évolue que très peu voire pas du tout pendant la durée du test et par conséquent son influence sur la pression régnant à l'intérieur de la poche est considérée comme négligeable.

Les courbes **P1, P2, P3** représentées sur la figure 7 représentent plusieurs cas de figure. La courbe P3 illustre un cas de figure où une non-intégrité de la poche a été détectée alors que les courbes P1 et P2 illustre un cas où la poche a été estimée intègre.

Plus précisément, on s'intéresse à la baisse de pression pendant que la position de la deuxième plaque est maintenue. En particulier, les inventeurs ont identifié un critère prédéfini permettant de déduire un état de défaut de la poche.

Selon un exemple type, le critère prédéfini correspond à une baisse totale de pression notée ΔP au bout d'une durée prédéfinie notée TT, à comparer à un seuil de décision ΔPth

En l'occurrence si ΔP > Δ**Pth**, alors un défaut d'intégrité de la poche déclaré, alors qu'à l'inverse si Δ**P** < Δ**Pth**, alors la poche est considérée comme intègre.

Le seuil de décision ΔPth n'est pas fixé une fois pour toutes, il dépend notamment de la durée du test TT, il peut dépendre de la viscosité du liquide, du niveau d'exigence (criticité) du contrôle, de la matière constituant la poche. ΔPth peut varier par exemple selon différentes configurations entre 20 mbar et 200 mbar.

Il est possible de conserver dans une table de référence **88** divers seuils de décision ΔPth, notamment en fonction de Ptest, de la durée de test TT, et de la gamme de viscosité estimée du produit contenu dans la poche.

Selon une autre solution possible, qui peut être utilisé en conjonction avec la précédente, le critère prédéfini peut correspondre à une baisse de pression par unité de temps (ΔP/t), à savoir un état de défaut est déclaré pour la poche si la baisse de pression par unité de temps est supérieure à un seuil prédéterminé. On peut obtenir une révélation précoce d'un défaut éventuel sans attendre nécessairement la durée prédéfinie TT prévue pour le test.

### Test électrique / plaque à électrodes

Dans un second mode de réalisation représenté notamment aux figures 4 et 5, il est prévu de pouvoir détecter une fuite de liquide par un test de nature électrique.

À cette fin, la première plaque **1** (inférieure) et la deuxième plaque **2** (supérieure) présentent une structure différente de celles déjà décrites plus haut. Toutefois, les éléments ou aspects qui ne sont pas commentés ici à nouveau sont considérés comme identiques ou similaires à ce qui a été décrit pour les plaques concernant le premier mode de réalisation.

Il est prévu une électrode d'armature, qui forme une couche conductrice de référence, cette électrode d'armature peut être formée soit par l'armature elle-même soit par une feuille conductrice formant électrode et agencée de manière adjacente à l'armature, auquel cas une isolation électrique est réalisée entre la feuille conductrice et l'armature.

L'armature **10** de la première plaque **1** est similaire à celle déjà décrite, et elle forme, selon la première option, un conducteur électrique assimilable à une électrode et est connectée à une borne de raccordement **C0.**

Selon la seconde option (représentée aux figures), il est prévu optionnellement entre une feuille conductrice **17** formant électrode adjacente à l'armature et destinée à être couplée à la borne électrique notée C0. Ladite feuille conductrice 17 peut se présenter par exemple sous la forme d'un feuillet d'aluminium, par exemple d'épaisseur 2 à 3mm. Mais toute autre couche conductrice pourrait convenir également, avec une couche isolante entre l'armature elle-même et cette couche conductrice.

L'armature comprend une face dorsale **19** appuyée sur un bâti de laboratoire ou portée sur un châssis. La face opposée de l'armature n'est pas destinée à venir en contact directement avec la poche. En effet, il est prévu une surface frontale poreuse **SF1,** ici formée comme une couche frontale poreuse repérée **11** électriquement conductrice.

La couche frontale poreuse **11** présente de préférence une épaisseur homogène et recouvre toute la surface de la première de manière à pouvoir traiter des poches de différentes dimensions. La couche frontale poreuse **11** présente une épaisseur comprise entre 0,5 mm et 3mm.

La couche frontale poreuse comprend un treillis de conduction électrique formant électrode reliée à la borne de raccordement notée **C1.**

Le treillis de conduction se présente comme un réseau maillé ou encore un filet ou une grille fine, réalisé en fils métalliques non sujets à la corrosion, par exemple de l'acier inoxydable, un alliage d'aluminium, du zinc, etc...

Le pas de maillage (la période de répétition géométrique) est compris entre 20 microns et 50 microns. Selon une option, le pas de maillage peut être compris entre 50 microns et 150 microns. Selon une option, pas de maillage peut être le compris entre 150 microns et 500 microns.

La couche frontale poreuse **11** peut être formée uniquement par le treillis de conduction. Toutefois dans une variante, le treillis de conduction peut être associé à un substrat poreux à base de polypropylène et/ou polyéthylène avec des pores de dimensions comprises entre 10 microns et 200 microns.

La première plaque comprend en outre une couche intermédiaire poreuse **12** interposée entre la couche frontale **11** et l'armature 10.

La couche intermédiaire poreuse **12** est formée en matière non tissée, choisi parmi les polypropylènes ou les polyéthylènes, ou autres matériaux polymères similaires.

La couche intermédiaire poreuse **12** présente une épaisseur comprise entre 1mm et 3mm, et des pores de dimensions comprises entre 20 microns et 500 microns.

La couche intermédiaire est électriquement non conductrice lorsqu'elle est sèche. Mais lorsque du liquide arrive dans la couche intermédiaire 12, celle-ci devient conductrice au moins à l'endroit où le liquide est présent, du fait de la présence dans les pores et de manière continue entre les pores d'un liquide provenant de la solution biopharmaceutique F qui s'est échappé de la poche. La solution biopharmaceutique en question contient des ions et présente une bonne conductance électrique.

Concernant la deuxième plaque **2,** sa constitution est identique ou similaire à la première, de façon symétrique par rapport au plan XY, une avec armature 20, une couche frontale 21 et une couche intermédiaire 22.

La couche frontale poreuse **21** est identique ou similaire à la couche frontale poreuse 11 de la première plaque. Notamment, la couche frontale poreuse 21 comprend un treillis de conduction électrique formant électrode reliée à la borne de raccordement notée **C1**'.

La couche intermédiaire poreuse **22** est identique ou similaire à la couche intermédiaire poreuse 12 de la première plaque.

Pour l'électrode d'armature, les deux solutions évoquées plus haut sont également disponibles ici.

Selon une première option, l'armature **20** de la deuxième plaque **2** est similaire à celle déjà décrite, et elle forme un conducteur électrique assimilable à une électrode et est connectée à une borne de raccordement **C0**'.

Selon la deuxième option (représentée aux figures), il est prévu optionnellement une feuille conductrice **27** formant électrode adjacente à l'armature et destinée à être couplée à la borne électrique notée C0'. Ladite feuille conductrice 27 peut se présenter par exemple sous la forme d'un feuillet d'aluminium, par exemple d'épaisseur 2 à 3mm. Mais toute autre couche conductrice pourrait convenir également, avec une couche isolante entre l'armature elle-même et cette couche conductrice.

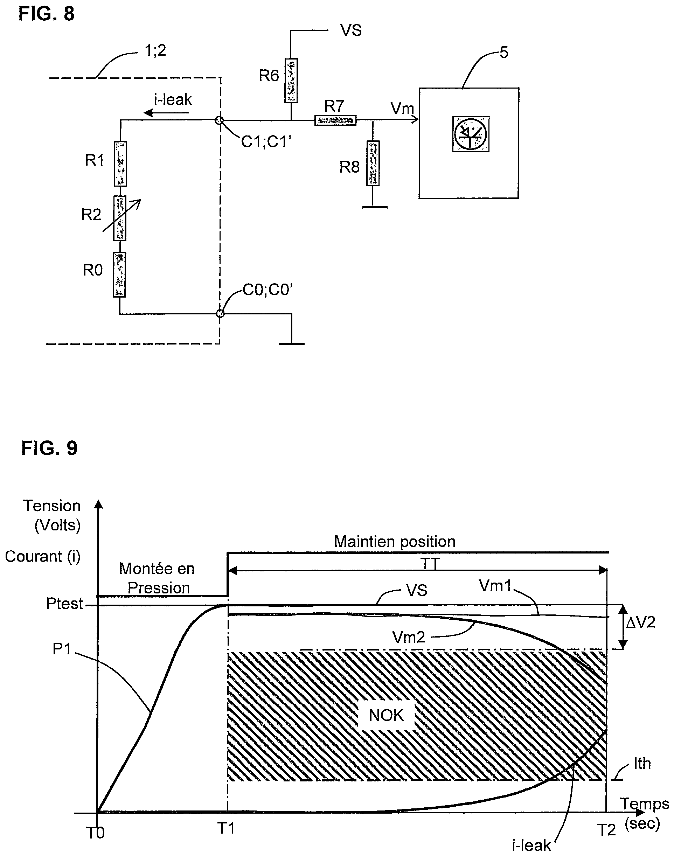

Comme illustré à la figure 8, les constituants d'une plaque (1, resp 2) forment une résistance électrique entre les bornes **C0** (respectivement C0') et C1 (respectivement C1'), en l'occurrence on trouve en série : la résistance de l'armature elle-même notée **R0,** la résistance de la couche intermédiaire notée **R2** et la résistance de la couche frontale notée **R1.**

Les résistances **R0** et **R1** sont des valeurs faibles et stables, elles n'évoluent pas au cours de la séquence de test. À l'inverse, la valeur de la résistance R2 dépend au premier ordre de la présence de liquide à l'intérieur de la couche intermédiaire. On peut considérer que **R2** et quasiment infini lorsque la couche intermédiaire poreuse est sèche (conductance nulle) ; dès que du liquide est présent dans la couche intermédiaire, la conductance devient non nulle et la résistance diminue de manière très prononcée.

Selon un exemple de montage électrique, on polarise la borne **C1** avec une tension de polarisation issue d'une station stabilisée **VS** protégée par une résistance de pull-up **R6.**

L'unité de commande **5** relit la tension de **C1** au travers d'un pont diviseur, **Vm** est l'attention de lecture.

Le courant **i-leak** circule en fonction de la valeur de la résistance **R2. i-Ieak** = 0 si la couche intermédiaire poreuse est sèche. Si la valeur de la résistance **R2** (liquide dans la couche intermédiaire) alors **i-leak** augmente et **Vm** baisse.

Un cas de fuite est représenté sur le chronogramme à la figure 9. **Vm2** représentent la tension mesurée à l'entrée de l'unité de commande dans le cas d'une fuite.

Selon une option, la différence de potentiel électrique est formée, non plus en mode continu comme décrit ci-dessus, mais en mode pulsé à partir de la tension stabilisée **VS.** Un switch électronique commandé (transistor MOS ou FET) est alors ajoutée entre la borne C**1** et la tension stabilisée **VS.** Ainsi, la mesure est faite à des moments particuliers seulement (quand le switch est actif) et la plaque n'est plus polarisée aux autres moments.

Selon une autre option, la différence de potentiel électrique est appliquée en mode alternatif. Il faut remarquer que la polarisation positive pourrait être raccordée à la deuxième borne **C0,** avec la première borne **C1** raccordé à la masse (référence des tensions).

Comme illustré à la figure 6, le dispositif de contrôle d'intégrité 7 comprend en outre de préférence un écran de visualisation **8** reliée à l'unité de commande 5.

L'écran de visualisation **8** permet de donner un résultat visuellement pour l'utilisateur du dispositif.

L'unité de commande **5** pilote un organe de commande reliée à l'actionneur de rapprochement de la plaque supérieure. Cet organe de commande peut être une électrovanne automatique noté **81,** un moteur électrique (cas du vérin électrique, de la came excentrique, ou de la solution pignon crémaillère). Par ailleurs, l'unité de commande **5** commande un organe commande pour le frein qui maintient la position sécurisée.

Le paramétrage des critères d'acceptation ou de rejet est contenu dans une base de données **88.** Ceci permet de rendre spécifiques les critères en fonction du type de poche à contrôler, du type et de liquide qui a été utilisé à l'intérieur de la poche et du niveau d'exigence du contrôle d'intégrité.

### Divers autres points

Il faut remarquer que le test de baisse de pression ainsi que le test de deux courants de fuite électrique peuvent être menée de façon combinée soit simultanément, soit l'un après l'autre.

L'unité de commande **5** peut être avantageusement logée dans une armoire d'équipement **9.**

S'agissant de l'agencement général, dans l'exemple illustré, les surfaces frontales des plaques sont agencées substantiellement horizontalement, toutefois pourrait aussi être agencé de manière substantiellement verticale, la poche pouvant être alors suspendue avant d'être compressée.

Il peut être prévu d'utiliser en plus de la méthode de baisse de pression et de la méthode électrique une méthode de détection par colorimétrie. À cet effet, on ajoute soit sur la face frontale soit derrière la face frontale de chaque plaque une feuille colorimétrique. On utilise par exemple cet effet un papier revêtu de chlorophénol qui présente la propriété de changer de couleur lorsqu'il est mis en contact avec de l'eau ou un solvant aqueux.

## Revendications

1. **Procédé** pour contrôler l'intégrité d'une poche (3) contenant un fluide biopharmaceutique, à l'aide d'un dispositif (7) comprenant au moins un capteur de pression (6,16), une unité de commande (5), deux plaques (1, 2) ayant des surfaces frontales poreuses (SF1,SF2) entre lesquelles on vient interposer la poche à contrôler (3) et au moins un actionneur (4) configuré pour déplacer au moins une des plaques, chaque plaque ayant une armature (10,20), une couche frontale poreuse (11,21) électriquement conductrice et une couche intermédiaire poreuse (12,22) interposée entre la couche frontale poreuse et l'armature, la couche intermédiaire étant électriquement non conductrice lorsqu'elle est sèche, le procédé comprenant :
**s1-** appliquer, par rapprochement des deux plaques l'une vers l'autre grâce audit actionneur (4), prenant ainsi en sandwich la poche à contrôler, une pression de test (Ptest) prédéterminée,
**s2-** puis maintenir la position des plaques pendant la suite du test,
**s3-** mesurer une valeur de pression représentative de la pression régnant dans la poche (3) à l'aide du capteur de pression (6;16) et déterminer les caractéristiques d'une baisse de pression au cours du temps,
**s4-** en déduire, par l'unité de commande, un état de défaut de la poche si la baisse de pression dépasse un critère prédéfini,
le procédé comprenant, après l'étape s1, et le cas échéant en parallèle des étapes s3 et s4 :
**c-** appliquer une différence de potentiel électrique entre une électrode d'armature (10,20;17;27) et la couche frontale poreuse (11, 21),
**d-** mesurer une valeur électrique représentative d'un courant électrique (i-leak) passant au travers de la couche intermédiaire (12,22), un tel courant étant représentatif de la présence d'un liquide de fuite à l'intérieur de la couche intermédiaire,
**e-** en déduire un état de défaut de la poche si la valeur électrique représentative d'un courant électrique dépasse un critère prédéfini (Ith).

2. Procédé selon la revendication 1, dans lequel le critère prédéfini correspond à une baisse (totale) de pression (ΔP2) au bout d'une durée prédéfinie (TT), à savoir un état de défaut est déclaré pour la poche si la baisse de pression (ΔP) au bout de la durée prédéfinie (TT) est supérieure à un seuil prédéterminé.

3. Procédé selon la revendication 2, dans lequel la durée prédéfinie (TT) est comprise entre 3 minutes et 60 minutes, de préférence comprise entre 5 et 30 minutes, et de manière encore préférée comprise entre 10 et 20 minutes.

4. Procédé selon la revendication 1, dans lequel le critère prédéfini correspond à une baisse de pression par unité de temps (ΔP/t), à savoir un état de défaut est déclaré pour la poche si la baisse de pression par unité de temps est supérieure à un seuil prédéterminé.

5. Procédé selon l'une des revendications 1 à 4, dans lequel la pression de test (Ptest) est comprise entre à 300 millibars et 1bar, de préférence comprise entre 400 millibars et 700 millibars.

6. Procédé selon l'une des revendications 1 à 5, dans lequel la pression de test (Ptest) est obtenue en utilisant le capteur de pression (6;16) et en rapprochant les deux plaques jusqu'à ce que la pression de test (Ptest) soit atteinte.

7. **Dispositif** (7) pour contrôler l'intégrité d'une poche à contrôler (3) contenant un fluide biopharmaceutique, comprenant au moins un capteur de pression (6,16), une unité de calcul (5), deux plaques (1, 2) ayant des surfaces frontales poreuses entre lesquelles on vient interposer la poche à contrôler (3), et au moins un actionneur (4) configuré pour déplacer au moins une des plaques, le dispositif étant configuré pour mettre en oeuvre le procédé selon la revendication 1.

8. Dispositif selon la revendication 7, dans lequel le capteur de pression (6) est agencé sur un port (33) de la poche.

9. Dispositif selon la revendication 7, dans lequel le capteur de pression (16) est agencé dans au moins une des plaque, de préférence derrière la surface ou la couche poreuse, sans contact direct avec la poche à contrôler.

10. Dispositif selon l'une des revendications 7 à 9, dans lequel les plaques montées à translation, sur un système de glissière.

11. Dispositif selon l'une des revendications 7 à 9, dans lequel il est prévu une première plaque (1) à position fixe, et une deuxième plaque (2) montée de façon mobile, de préférence au-dessus de la première plaque.

12. Dispositif selon l'une des revendications 7 à 11, dans lequel les surfaces frontales poreuses sont formées en matière non tissée, choisi parmi les polypropylènes ou les polyéthylènes, ou autres matériaux polymères similaires.

13. Dispositif selon l'une des revendications 7 à 12, dans lequel la surface frontale (SF1;SF2) est formée comme une couche frontale poreuse (11;21) présentant une épaisseur comprise entre 1mm et 3mm, et des pores de dimensions comprises entre 10 microns et 200 microns.

14. Dispositif selon l'une des revendications 7 à 13, dans lequel il est prévu au moins une actionneur (4) de mise en pression des plaques, formé comme un vérin pneumatique ou comme un vérin électrique.

## Patentansprüche

1. Verfahren zum Prüfen der Unversehrtheit eines Beutels (3), der ein biopharmazeutisches Fluid enthält, mit Hilfe einer Vorrichtung (7), die mindestens einen Drucksensor (6; 16), eine Steuereinheit (5), zwei Platten (1, 2) mit porösen Frontflächen (SF1, SF2), zwischen denen der zu prüfende Beutel (3) angeordnet wird und mindestens einen Aktuator (4) umfasst, der so konfiguriert ist, dass er mindestens eine der Platten bewegt, wobei jede Platte eine Verstärkung (10, 20), eine poröse, elektrisch leitfähige Frontschicht (11, 21) und eine poröse Zwischenschicht (12, 22) aufweist, die zwischen der porösen Frontschicht und der Verstärkung angeordnet ist, wobei die Zwischenschicht elektrisch nicht leitfähig ist, wenn sie trocken ist, wobei das Verfahren umfasst:
s1- Anlegen, durch Annäherung der zwei Platten zueinander durch den Aktuator (4), wodurch der zu prüfende Beutel sandwichartig aufgenommen wird, eines vorbestimmten Prüfdrucks (Ptest),
s2- dann Halten der Position der Platten während der Fortsetzung des Tests,
s3- Messen eines Druckwerts, der für den in dem Beutel (3) herrschenden Druck repräsentativ ist, mit Hilfe des Drucksensors (6; 16) und Bestimmen der Merkmale eines Druckabfalls im Laufe der Zeit,
s4- Ableiten daraus, durch die Steuereinheit, eines Fehlerzustands des Beutels, wenn der Druckabfall ein vordefiniertes Kriterium überschreitet,
wobei das Verfahren nach dem Schritt s1 und gegebenenfalls parallel zu den Schritten s3 und s4 umfasst:
c- Anlegen einer elektrischen Potentialdifferenz zwischen einer Elektrode der Verstärkung (10, 20; 17; 27) und der porösen Frontschicht (11, 21),
d- Messen eines elektrischen Wertes, der für einen elektrischen Strom (i-leak) repräsentativ ist, der durch die Zwischenschicht (12, 22) fließt, wobei ein derartiger Strom für das Vorhandensein einer Leckageflüssigkeit im Inneren der Zwischenschicht repräsentativ ist,
e- Ableiten daraus eines Fehlerzustands des Beutels, wenn der für einen elektrischen Strom repräsentative elektrische Wert ein vordefiniertes Kriterium (Ith) überschreitet.

2. Verfahren nach Anspruch 1, wobei das vordefinierte Kriterium einem (gesamten) Druckabfall (ΔP2) nach einer vordefinierten Zeitdauer (TT) entspricht, d. h. ein Fehlerzustand für den Beutel gemeldet wird, wenn der Druckabfall (ΔP) nach der vordefinierten Zeitdauer (TT) einen vorbestimmten Schwellenwert überschreitet.

3. Verfahren nach Anspruch 2, wobei die vordefinierte Dauer (TT) zwischen 3 Minuten und 60 Minuten, vorzugsweise zwischen 5 und 30 Minuten und besonders bevorzugt zwischen 10 und 20 Minuten liegt.

4. Verfahren nach Anspruch 1, wobei das vordefinierte Kriterium einem Druckabfall je Zeiteinheit (ΔP/t) entspricht, d. h. ein Fehlerzustand für den Beutel gemeldet wird, wenn der Druckabfall je Zeiteinheit einen vorbestimmten Schwellenwert überschreitet.

5. Verfahren nach einem der Ansprüche 1 bis 4, wobei der Testdruck (Ptest) zwischen 300 Millibar und 1 bar, vorzugsweise zwischen 400 Millibar und 700 Millibar, liegt.

6. Verfahren nach einem der Ansprüche 1 bis 5, wobei der Testdruck (Ptest) durch Verwenden des Drucksensors (6; 16) und durch Annähern der beiden Platten erhalten wird, bis der Testdruck (Ptest) erreicht ist.

7. Vorrichtung (7) zum Prüfen der Unversehrtheit eines zu prüfenden Beutels (3), der ein biopharmazeutisches Fluid enthält, die mindestens einen Drucksensor (6; 16), eine Recheneinheit (5), zwei Platten (1, 2) mit porösen Frontflächen, zwischen denen der zu prüfende Beutel (3) angeordnet wird und mindestens einen Aktuator (4) umfasst, der so konfiguriert ist, dass er mindestens eine der Platten bewegt, wobei die Vorrichtung so konfiguriert ist, dass sie das Verfahren nach Anspruch 1 durchführt.

8. Vorrichtung nach Anspruch 7, wobei der Drucksensor (6) an einem Port (33) des Beutels eingerichtet ist.

9. Vorrichtung nach Anspruch 7, wobei der Drucksensor (16) in mindestens einer der Platten eingerichtet ist, vorzugsweise hinter der porösen Oberfläche oder Schicht, ohne direkten Kontakt mit dem zu prüfenden Beutel.

10. Vorrichtung nach einem der Ansprüche 7 bis 9, wobei die Platten translatorisch auf einem Gleitsystem angebracht sind.

11. Vorrichtung nach einem der Ansprüche 7 bis 9, wobei eine erste Platte (1) mit fester Position und eine zweite Platte (2), die beweglich angebracht ist, vorzugsweise oberhalb der ersten Platte, vorgesehen sind.

12. Vorrichtung nach einem der Ansprüche 7 bis 11, wobei die porösen Frontflächen aus einem Vliesmaterial, ausgewählt aus den Polypropylenen oder den Polyethylenen oder anderen ähnlichen Polymermaterialien, gebildet sind.

13. Vorrichtung nach einem der Ansprüche 7 bis 12, wobei die Frontfläche (SF1; SF2) als eine poröse Frontschicht (11; 21) gebildet ist, die eine Dicke zwischen 1 mm und 3 mm und Poren mit einer Größe zwischen 10 Mikron und 200 Mikron aufweist.

14. Vorrichtung nach einem der Ansprüche 7 bis 13, wobei mindestens ein Aktuator (4) zur Druckbeaufschlagung der Platten vorgesehen ist, der als Pneumatikzylinder oder als Elektrozylinder ausgebildet ist.

## Claims

1. A method for checking the integrity of a biopharmaceutical fluid-containing pouch (3), using a device (7) comprising at least one pressure sensor (6; 16), a control unit (5), two plates (1, 2) having porous front surfaces (SF1, SF2) between which is interposed the pouch to be checked (3) and at least one actuator (4) configured to move at least one of the plates, each plate having a frame (10, 20), an electrically conductive porous front layer (11, 21) and a porous intermediate layer (12, 22) interposed between the porous front layer and the frame, the intermediate layer being electrically non-conductive when dry, the method comprising:
s1- applying a predetermined test pressure (Ptest) by bringing the two plates closer together by means of said actuator (4), thus sandwiching the pouch to be checked,
s2- then maintaining the position of the plates during the rest of the test,
s3- measuring a pressure value representative of the pressure prevailing in the pouch (3) using the pressure sensor (6;16) and determining the characteristics of a pressure drop over time,
s4- deducing therefrom, by the control unit, a defective state of the pouch if the pressure drop exceeds a predefined criterion, the method comprising, after step s1, and optionally, in parallel, steps s3 and s4:
c- applying an electric potential difference between a frame electrode (10, 20; 17; 27) and the porous front layer (11, 21),
d- measuring an electrical value representative of an electrical current (i-leak) passing through the intermediate layer (12, 22), such a current being representative of the presence of a leakage liquid inside the intermediate layer,
e- deducing therefrom a defective state of the pouch if the electrical value representative of an electrical current exceeds a predefined criterion (Ith).

2. The method according to claim 1, wherein the predefined criterion corresponds to a (total) drop in pressure (ΔP2) after a predefined period of time (TT); a defective state is declared for the pouch if the pressure drop (ΔP) after the predetermined time (TT) exceeds a predetermined threshold.

3. The method according to claim 2, wherein the predefined time (TT) is comprised between 3 minutes and 60 minutes, preferably between 5 and 30 minutes, and more preferably between 10 and 20 minutes.

4. The method according to claim 1, wherein the predefined criterion corresponds to a pressure drop per unit of time (ΔP/t), i.e., a defective state is declared for the pouch if the pressure drop per unit of time exceeds a predetermined threshold.

5. The method according to one of claims 1 to 4, wherein the test pressure (Ptest) is comprised between 300 millibars and 1 bar, preferably between 400 millibars and 700 millibars.

6. The method according to one of claims 1 to 5, wherein the test pressure (Ptest) is obtained by using the pressure sensor (6; 16) and bringing the two plates together until the test pressure (Ptest) is reached.

7. A device (7) for checking the integrity of a pouch (3) to be checked containing a biopharmaceutical fluid, comprising at least one pressure sensor (6; 16), a computing unit (5), two plates (1, 2) having porous front surfaces between which the bag (3) to be tested is interposed, and at least one actuator (4) configured to move at least one of the plates, the device being configured to implement the method of claim 1.

8. The device according to claim 7, wherein the pressure sensor (6) is arranged on a port (33) of the pouch.

9. The device according to claim 7, wherein the pressure sensor (16) is arranged on at least one of the plates, preferably behind the porous surface or layer, without direct contact with the pouch to be checked.

10. The device according to one of claims 7 to 9, wherein the plates are mounted in translation on a slide system.

11. The device according to one of claims 7 to 9, wherein a fixed first plate (1) and a movably mounted second plate (2), preferably above the first plate, are provided.

12. The device according to one of claims 7 to 11, wherein the porous front surfaces are formed of a non-woven material selected from polypropylenes or polyethylenes or other similar polymer materials.

13. The device according to one of claims 7 to 12, wherein the front surface (SFL; SF2) is formed as a porous front layer (11; 21) having a thickness comprised between 1 mm and 3 mm, and pores of dimensions comprised between 10 microns and 200 microns.

14. The device according to one of claims 7 to 13, wherein at least one actuator (4) for pressurizing the plates is provided, which is designed as a pneumatic cylinder or as an electric cylinder.
